# EUROPEAN PATENT APPLICATION

(11) **EP 2 849 072 A1**
(43) Date of publication of application: **18.03.2015**
(21) Application number: 12884498.2
(22) Date of filing: 27.09.2012
(51) Int. Cl.: G06F 13/00

(54) **CONTENT DELIVERY SYSTEM, CONTENT DELIVERY DEVICE, AND CONTENT DELIVERY METHOD**

(30) Priority: 12.09.2012 JP 2012200967
(71) Applicant: G-Cluster Global Corporation, Tokyo 107-0052 (JP)
(72) Inventor: KANDORI, Yasuyuki, Tokyo 107-0052 (JP); NAKAMA, Takao, Tokyo 107-0052 (JP); IIJIMA, Kazuyuki, Tokyo 107-0052 (JP); HASHIMOTO, Taro, Tokyo 107-0052 (JP)
(74) Representative: Schwabe - Sandmair - Marx
(86) International application number: PCT/JP2012/074991
(87) International publication number: WO 2014/041704

(57) **Abstract**

A server (101) delivers through a broadband network (104), content (101) to a display terminal (102) of a client. The client includes the display terminal (102) that displays the content (101) delivered from the server (101) and an input terminal (103) that outputs to the server (101), input information for controlling delivery of the content (110). The input terminal (103) is connected directly through a mobile network between the input terminal (103) and the server (101) and not through the display terminal 102.

## Description

### TECHNICAL FIELD

The present invention relates to a content delivery system, a content delivery apparatus, and a content delivery method that deliver content to clients from a server.

### BACKGROUND ART

As a method of delivering content from a server to a terminal of a client through a network such as the Internet, one technique, for example, delivers content from a server to a client consequent to the content being purchased by the client (see, for example, Patent Document 1). This technique can simplify procedures for purchasing interactive content such as video content, games, etc. and prevent unauthorized use of the content. The technique can further provide video and audio provided by the purchased content to the user consequent to the operation of a dedicated input device connected to the client.

Further, cloud-type content delivery methods are present that are based on a configuration in which content is retained by a server and a client is connected to the server through a broadband network, and that sequentially transmit from the server, data of the content to the client consequent to the operation of a dedicated input device connected to the client. These techniques enable the delivery of content (e.g., games) and execution operations to be performed without being dependent on the performance of the client.

Another technology has the same configuration above where content is retained by a server and a client is connected to the server through a broadband network, but is further configured to enable a general-purpose input device to be connected to a client. As a result, the delivery of content and execution operations by the operation of a mobile telephone, smartphone, etc. can be more diversified.

Patent Document 1: Japanese Laid-Open Patent Publication No. 2006-011632

### DISCLOSURE OF INVENTION

### PROBLEM TO BE SOLVED BY THE INVENTION

Nonetheless, with each of the conventional techniques, the input device is subject to the limitations of the function of the client since the input device is connected to a given client to which content is to be delivered. Even with a client configured to enable the connection of a general-purpose input device as described above, on the client side, the input function cannot be easily expanded, replaced, etc. to correspond to the input from a wide variety of input devices. Furthermore, a constraint exists in that the client and the input device have to be at the same location.

The client is configured to relay operational input from the input device and communicate with the server through a network. Consequently, the process of receiving an input signal after a user has manipulated the input device and transmitting the input signal to the server is dependent on the performance and protocol scheme of the client. Therefore, transmission of the input signal takes time and some delay occurs in the response time until display at the client occurs. In particular, with content communicated in real-time such as games, if execution operations (operation response) for the content is slow consequent to data processing delays at the client, the user has to wait for execution as a result of the processing delays.

In light of the above problems, one object of the present invention is to provide a content delivery system, a content delivery apparatus, and a content delivery method that can promptly perform content delivery without being constrained by the performance of the client, and that can handle a wide variety of input functions.

### MEANS FOR SOLVING PROBLEM

To achieve an object, a content delivery system according to the present invention delivers content from a server to a client that includes a display terminal configured to display the content delivered from the server and an input terminal configured to output to the server, input information for controlling delivery of the content, where the input terminal is connected directly through a communications network and not through the display terminal.

The server delivers the content to the display terminal through a first network; and the input terminal is connected to the server through a second network that is different from the first network.

The first network is a broadband network; the input terminal is a mobile terminal configured to have a general purpose communication function, an input function, and a display function; and the second network is a communications network by which the mobile terminal can communicate.

The server, with respect to a single unit of the content delivered to the display terminal, permits concurrent connection of a plurality of the input terminals, and based on the input information of the input terminals, controls the delivery of the content.

The content is interactive content, and the server changes delivery details, based on the input information of the input terminals.

The input terminal acquires/transmits consecutive values as the input information.

The input terminal acquires/transmits binary data as the input information.

Further, a content delivery apparatus of the present invention is a content delivery apparatus configured to deliver content to a client including a display terminal that displays the delivered content and an input terminal that output input information for controlling delivery of the content, where the content delivery apparatus directly receives through a communications network between the content delivery apparatus and the input terminal and not through the display terminal, the input information output from the input terminal.

Further, a content delivery method of the present invention is a content delivery method of a content delivery system having a server that delivers content to a client including a display terminal that displays the delivered content and an input terminal that outputs input information for controlling delivery of the content. The content delivery method includes directly receiving by the server, the input information from the input terminal connected to the server through a communications network between the server and the input terminal and not through the display terminal; and controlling by the server and based on the input information, the delivery of the content to the display terminal.

### EFFECT OF THE INVENTION

The present invention enables prompt content delivery without constraints related to client performance, and the handling of a wide variety of input functions.

### BRIEF DESCRIPTION OF DRAWINGS

Fig. 1 is a diagram depicting an overall configuration of the content delivery system according to the present invention;
Fig. 2 is a block diagram of functions of the system depicted in Fig. 1;
Fig. 3 is a diagram depicting a hardware configuration example of the server;
Fig. 4 is a diagram depicting procedures of overall processes in the system for content delivery; and
Fig. 5 is a diagram depicting state transitions of session information stored in the session storage unit.

### BEST MODE(S) FOR CARRYING OUT THE INVENTION

Preferred embodiments of a content delivery system, a content delivery apparatus, and a content delivery method according to the present invention will be described in detail with reference to the accompanying drawings.

### (Overall configuration of content delivery system)

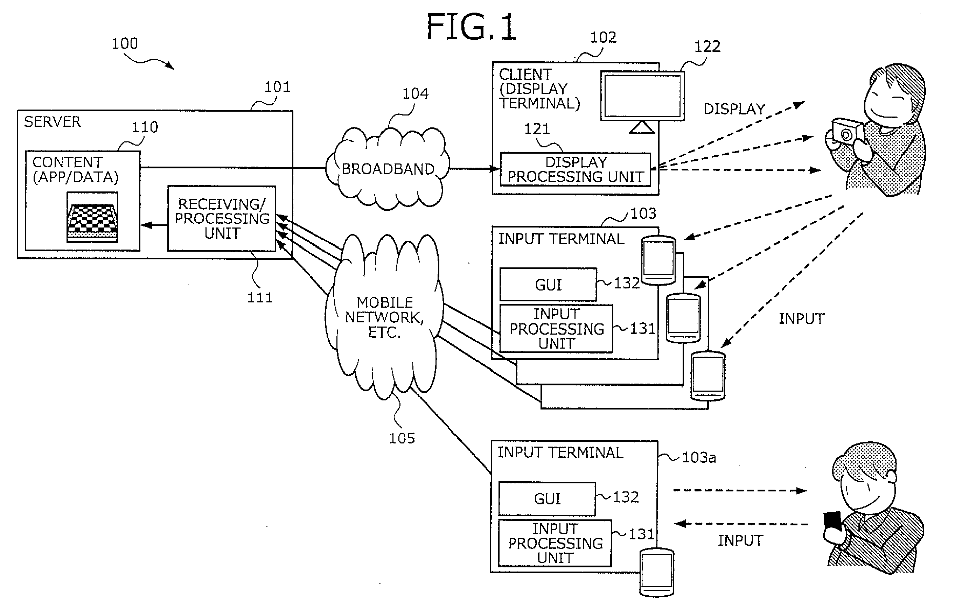

Fig. 1 is a diagram depicting an overall configuration of the content delivery system according to the present invention. A content delivery system 100 is configured by a server 101 that is a content delivery source, a display terminal 102 provided on the user side (client), and an input terminal 103. The server 101 and the display terminal 102 communicate and are connected by a network 104 such as a broadband internet.

Furthermore, the input terminal 103 communicates with and is connected to the server 101, without use of the display terminal 102. In the example depicted in the drawing, the server 101 and the input terminal 103 communicate and are connected through a mobile network 105 that is another communications network by which the input terminal 103 can communicate, other than the network 104. Nonetheless, configuration may be such that the server 101 and the input terminal 103 are connected through the network 104.

The server 101 retains content 110 that is provided to the user of the display terminal 102. Further, a receiving/processing unit 111 receives and processes information (delivery request for the content, etc.) related to an input operation that is for content delivery and received through the mobile network 105 consequent to manipulation of the input terminal 103 by the user.

The display terminal 102 displays the content 110 delivered from the server 101 on a display unit 122, via a display processing unit 121, and outputs sound from a non-depicted speaker. A TV, PC, etc. can be used as the display terminal 102.

The input terminal 103 has an input processing unit 131 that is manipulated by the user for delivery of the content 110 to the display terminal 102 and a graphic user interface (GUI) 132 that displays an operation screen, etc. A general-use terminal such as a mobile telephone, smartphone, PDA, etc. can be used as the input terminal 103. Consequent to a user operation, the input processing unit 131 transmits operation information to the receiving/processing unit 111 of the server 101, via the mobile network 105.

The input terminal 103 may be implemented by a smartphone and by installing a program for content delivery operation into the smartphone, the smartphone can be operated for delivery of the content 110 to the display terminal 102. Thus, by using a general-purpose terminal and installing or changing to a program for content delivery operation, operation functions for content delivery can be easily expanded.

As depicted in Fig. 1, for example, with respect to a single unit of the display terminal 102 to which content is delivered, multiple units of the input terminal 103 can be operated to respectively manipulate the delivery of the content. For example, a game, etc. can be concurrently used by numerous users. Information of the display terminal 102 that is the delivery destination of the content and information related to the multiple units of the input terminal 103 permitted concurrent operation are correlated and retained by the server 101 by an application for content delivery operation of the input terminal 103 or by registration made in advance by operating the input terminal 103.

Further, as depicted in Fig. 1, in addition to delivery of the content to the display terminal 102 and manipulation of the content delivery by the input terminals 103, and configuration may be such that display of the content and delivery operations are performed by a single unit of the input terminal 103a. The input terminal 103a has the same functions as the input terminals 103. The input terminal 103a receives the delivery of content from the server 101 via a connectable network (in the depicted example, the mobile network 105), and performs delivery operations with respect to the server 101. Use of the input terminal 103a, for example, enables a user for which delivery of the content is permitted to perform at the display terminal 102 that is provided at a different location, input operations for the content.

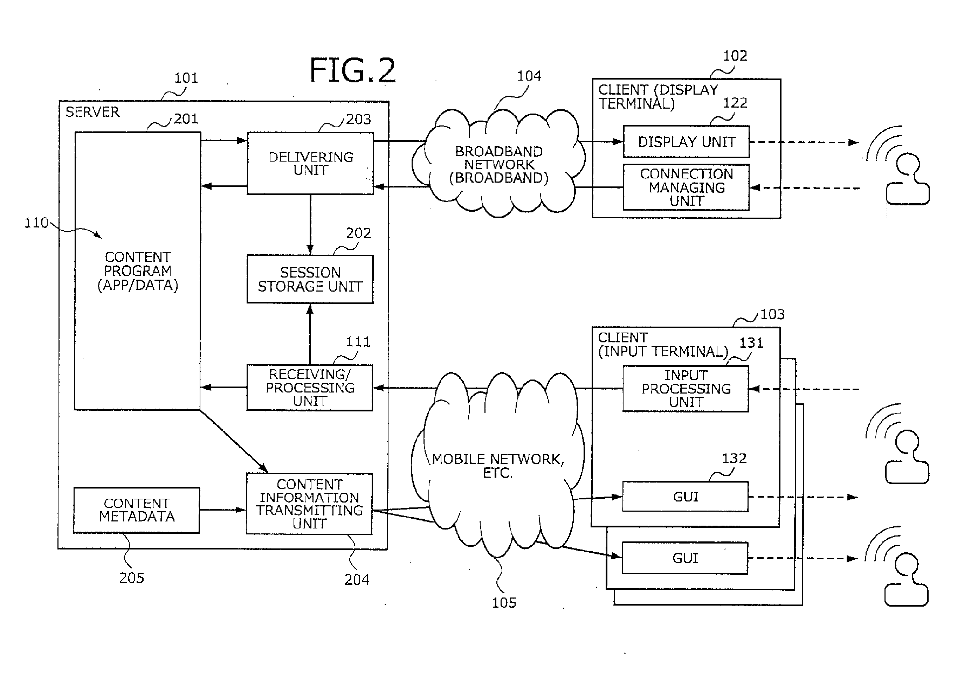

Fig. 2 is a block diagram of functions of the system depicted in Fig. 1. The server 101 includes the receiving/processing unit 111 above, a content storage unit 201 that stores the content 110, a session storage unit 202, a delivering unit 203, a content information transmitting unit 204, and content metadata 205. The content 110 includes data for streaming such as video, and application data such as games, etc.

Based on the reception of operation information (e.g., a token described hereinafter) from the input terminal 103, the receiving/processing unit 111, refers to information in the session storage unit 202 and requests output of the content to a concerned user. The session storage unit 202 stores information concerning the input terminal 103 to which content is delivered and information concerning users. When content is delivered, the delivering unit 203 refers to information stored in the session storage unit 202 and after authenticating the display terminal 102 of the concerned user, controls the delivery of the content to the display terminal 102.

The content metadata 205 is information related to content. The content information transmitting unit 204 transmits information of the content to the input terminal 103 in response to an input of operation information concerning content delivery from the input terminal 103.

### (Hardware configuration example of content delivery apparatus)

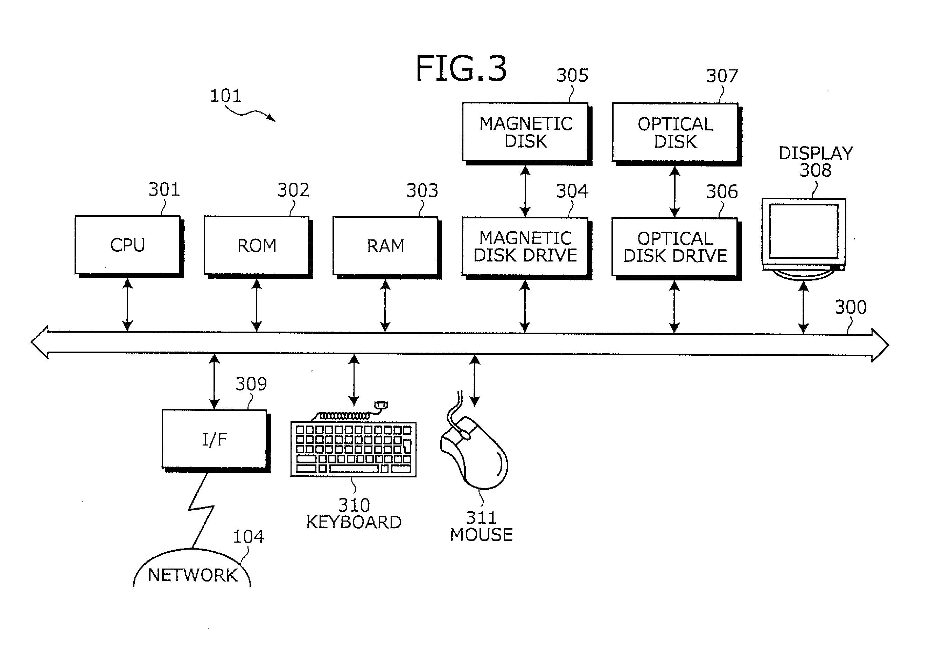

Fig. 3 is a diagram depicting a hardware configuration example of the server. In Fig. 3, the server 101 includes a central processing unit (CPU) 301, read-only memory (ROM) 302, random access memory (RAM) 303, a magnetic disk drive 304, a magnetic disk 305, an optical disk drive 306, an optical disk 307, a display 308, an interface (I/F) 309, a keyboard 310, and a mouse 311, respectively connected by a bus 300.

The CPU 301 governs overall control of content delivery of the server 101. The ROM 302 stores programs such as a boot program. The RAM 303 is used as a work area of the CPU 301. The magnetic disk drive 304, under the control of the CPU 301, controls the reading and writing of data with respect to the magnetic disk 305. The magnetic disk 305 stores data written thereto under the control of the magnetic disk drive 304.

The optical disk drive 306, under the control of the CPU 301, controls the reading and writing of data with respect to the optical disk 307. The optical disk 307 stores data written thereto under the control of the optical disk drive 306, the data stored on the optical disk 307 being read by a computer.

The display 308 displays data such as text, images, and function information in addition to a cursor, icons and a toolbox. A CRT, LCD, etc. may be employed as the display 308, for example.

The I/F 309 is connected to the network 104 via a communication line and is connected to other apparatuses through network 104. The I/F 309 administers an internal interface with the network 104 and controls the input and output of data with respect to other apparatuses. A modem, LAN adapter, etc. can be employed as the I/F 309.

The keyboard 310 has, for example, keys for inputting letters, numerals, and various instructions and performs the input of data. Alternatively, a touch-panel-type input pad or numeric keypad, etc. may be adopted. The mouse 311 is used to move the cursor, select a region, or move and change the size of windows. A track ball or a joy stick may be adopted provided each respectively has a function similar to a pointing device.

Further, the display terminal 102 and the input terminal 103 on the client side and depicted in Fig. 1 can be implemented by the same hardware configuration as the server 101 above. The content storage unit 201 depicted in Fig. 1 is implemented by the RAM 303, the magnetic disk 305, the optical disk 307, etc. The server 101 may be configured to omit the optical disk drive 306, the optical disk 307, the display 308, the keyboard 310, the mouse 311, etc. among the components above, for example.

A mobile telephone, smartphone, PDA, etc. having a general-purpose communication function, sensor function, display function, and input operation function can be used as the input terminal 103. Further, the input terminal 103 can be configured such that input operations for content delivery are executed by software on a CPU. Input operations are not limited to hand operations by the user and functions such as audio input and directional input based on sensor gradient detection of the input terminal 103 can be used for controlling content delivery.

### (Procedures of overall processes in system for content delivery)

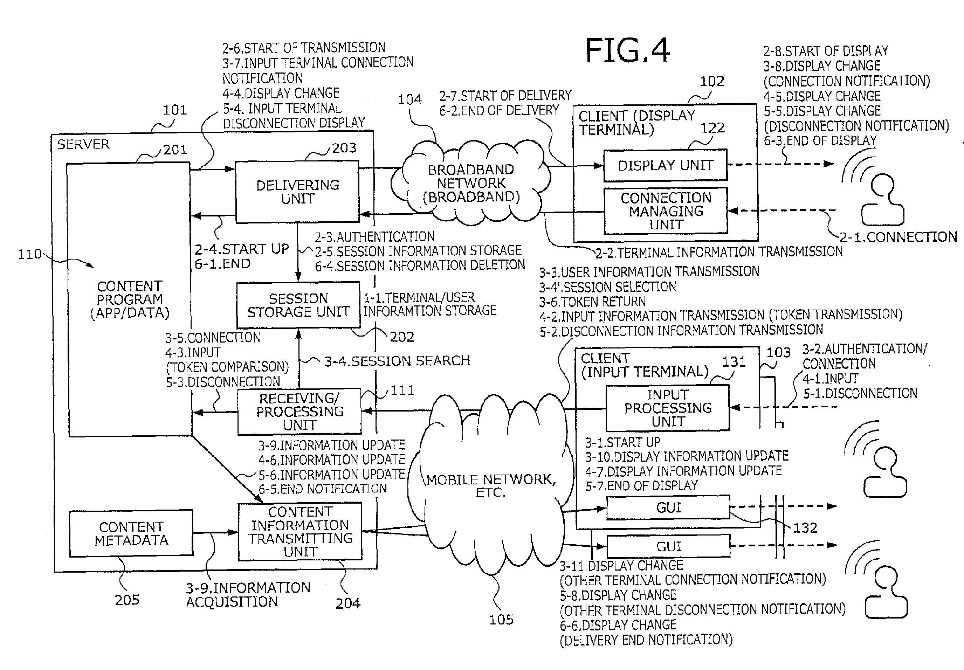

Fig. 4 is a diagram depicting procedures of overall processes in the system for content delivery. Fig. 4 depicts procedures of processes at the components in Fig. 2. In Fig. 4, although configuration of a control unit (corresponds to the CPU 301 in Fig. 3) that manages overall control is not depicted, the control unit supervises the processes of the components, concerning the procedures described hereinafter. Procedures for each component are indicated in parenthesis.

Process procedures of the overall system are executed in the order of 1. preliminary registration, 2. start of delivery, 3. input terminal connection, 4. input operation, 5. input terminal disconnection, and 6. end of delivery. The process procedures will be described sequentially hereinafter.

### 1. Preliminary registration

The session storage unit 202 retains correspondence relations of terminal IDs and user IDs of the input terminals 103 (procedure 1-1). A terminal ID is issued when the input terminal 103 is shipped or at a first accessing. At the time of user login, the correspondence relation of the user ID issued at the time of user registration and the ID of the input terminal 103 is retained. More specifically, if a physical person makes payment, for each contract paid, the user ID may be an ID for a household/family that has paid and has rights to use delivered services.

### 2. Start of delivery

When the display terminal 102 is started for content delivery connection (procedure 2-1), terminal information of the display terminal 102 is transmitted to the server 101 (procedure 2-2). At the server 101, authentication of the display terminal 102 is performed (procedure 2-3), the content (program) 110 is started (procedure 2-4), and through the delivering unit 203, the server 101 is connected to the display unit 122 of the display terminal 102 on the client side. This correspondence relation is call a session and is issued a unique ID to discriminate connections.

During the interval during which the display terminal 102 is connected to the server 101, a user/session relation concerning the display terminal 102 and the input terminal 103 is retained in the session storage unit 202 (procedure 2-5). The delivering unit 203 begins transmission of the content 110 to the display terminal 102 (procedure 2-6, 2-7). The display terminal 102 begins display of the content that has started to be delivered (procedure 2-8).

The delivering unit 203 disposed in the server 101 encodes video and audio output by the content (program) 110. The display unit 122 disposed in the display terminal 102 decodes and monitors output of the video and audio information output from the server 101.

### 3. Input terminal connection

Next, a case where the content 110 such as a delivered game is interactively operated by the input terminal 103 will be described. When the user starts the input terminal 103 (procedure 3-1), an application of the input terminal 103 and for content delivery authenticates the user ID by a user operation (procedure 3-2), and transmits user information to the server 101 (procedure 3-3).

At the server 101, the receiving/processing unit 111 searches the session storage unit 202 for session information of the user (procedure 3-4), and connects to the content 110 concerned (procedure 3-5).

Here, if multiple sessions are present, i.e., multiple display terminals 102 are present, a list of the display terminals 102 is returned to the input terminal 103 for the user to make a selection (procedure 3-4'). Upon connection, the receiving/processing unit 111 of the server 101 returns to the input terminal 103, a token valid only for that session (procedure 3-6). When the input terminal 103 is connected to the server 101, connection notification concerning the input terminal 103 is transmitted to the display terminal 102, via the delivering unit 203 (procedure 3-7), and connection of the input terminal 103 is displayed on the display unit 122 of the display terminal 102 (procedure 3-8).

Here, the content information transmitting unit 204 of the server 101 can also acquire information of the content 110 and the content metadata 205 (procedure 3-9), update the information of the content, transmit the updated information to the input terminal 103, and change the displayed information and/or input mode of the GUI 132 of the input terminal 103 (procedure 3-10).

If another input terminal 103 (including 103a) is connected during the same session, the server 101 can send to the input terminal 103, notification of the connection of the new input terminal 103 (procedure 3-11). More specifically, the GUI 132 of the input terminal 103 can "display nicknames and number of connected users, etc.", "display description, images, etc. of game/video content", "switch the remote controller from a display of game pad to a display of video player", etc.

### 4. Input operation

When the user inputs operation information to the input terminal 103 (procedure 4-1), the input processing unit 131 transmits to the server 101, the input operation information together with the token acquired at procedure 3-6 (procedure 4-2). More specifically, here, the input processing unit 131 acquires and transmits to the server 101, "Press/Release (digital value of 0/1) of a key", "text data", "coordinate values (consecutive values) of a touched location", "audio/images (binary data) acquired by the input terminal", etc.

The receiving/processing unit 111 of the server 101 verifies (compares) the received token and if the token coincides, gives the input information to the content 110 (procedure 4-3). If the token does not coincide, the receiving/processing unit 111 determines that unauthorized access has occurred and discards the input.

The content 110 changes the displayed details of the content, according to input details (procedure 4-4); and the display terminal 102 displays the changed content (procedure 4-5). Here, since the state of the content (program) 110 changes, updated display can also be performed at the input terminal 103, through the content information transmitting unit 204 (procedures 4-6, 4-7). Display can be changed according to the operation input of the input terminal 103 and for example, "movement of characters in a game, when a button is pressed", "chapter forwarding/reversing of video data", "branching a story according to selection", "display an input message/image", etc. is performed.

### 5. Input terminal disconnection

If a disconnection operation (including turning OFF the power supply) has been performed at the input terminal 103 (procedure 5-1), the input terminal 103 transmits disconnection information together with the token acquired at procedure 3-6 to the server 101 (procedure 5-2). At the server 1-1, the corresponding token is deleted (procedure 5-3). Upon notification of the disconnection, the content (program) 110 changes the display according to the disconnection (procedure 5-4), and updates the display on the display terminal 102 (procedure 5-5).

Further, if another connected input terminal 103 is present, similar to procedures 3-9 to 3-11 above, the server 101 can update the information of the content for the input terminal 103, and update the display at the input terminal 103 (procedures 5-6 to 5-8). This display update, more specifically, includes "giving notification of the disconnection of a user together with the nickname of the user", "deleting the character manipulated by a disconnected user", etc.

### 6. End of delivery

If the content (program) 110 has ended (procedure 6-1), the delivering unit 203 ends delivery (procedure 6-2); the display terminal 102 ends display of the content 110 at the display unit 122 (procedure 6-3). Here, the delivering unit 203 deletes the session information (procedure 6-4). Thus, the session of the concerned user ends, enabling connection from a new input terminal 103. Further, if a connected input terminal 103 is present, similar to procedures 3-9 to 3-11 above, the server 101 notifies the input terminal 103 of the disconnection (procedures 6-5, 6-6). The triggering of an end of the content (program) 110 is based on operations from the input terminal 103 or the display terminal 102, to end the content delivery, intentional ending of the content (program) 110; disconnection consequent to poor communication of the network 104; etc.

### (State transition of session information)

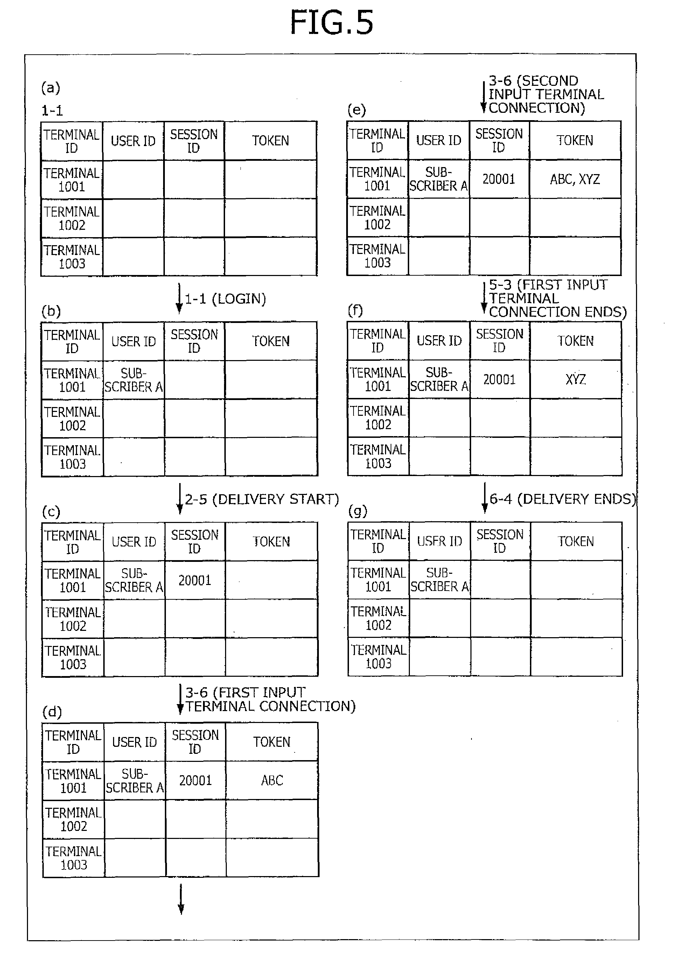

Fig. 5 is a diagram depicting state transitions of session information stored in the session storage unit. In Fig. 5, (a) to (g) sequentially depict state transitions of session information. As described, the session information stored in the session storage unit 202 correlates for each terminal ID of the input terminals 103, a user ID, a session ID, and a token, and is updated.

First, as depicted in (a) of Fig. 5, for example, in the session storage unit 202, terminal IDs of the input terminals 103 are assumed to be preliminarily registered. Hereinafter, state transitions of terminal ID=1001 will be described. When the input terminal 103 of the concerned terminal ID=1001 logs in (procedure 1-1), as depicted in (b) of Fig. 5, the user ID (=subscriber A) is recorded. Next, as depicted in (c) of Fig. 5, when delivery of the content 110 starts (procedure 2-5), the session ID(=20001) is recorded.

As depicted in (d) of Fig. 5, when a first input terminal 103 is connected, a token(=ABC) that is valid only during the session(ID=20001) is returned to the input terminal 103 (procedure 3-6). Similarly, when a second input terminal 103 is connected, as depicted in (e) of Fig. 5, a token(=XYZ) that is valid only during the session(ID 20001) is returned to the input terminal 103 (procedure 3-6). Thus, with respect to the one content 110, concurrent input operation by two input terminals 103 is permitted.

Subsequently, when the first input terminal 103 ends, as depicted in (f) of Fig. 5, the token(=ABC) valid only during the session(ID=20001) is deleted from the input terminal 103 (procedure 5-3). Subsequently, when delivery of the content 110 ends (procedure 6-4), as depicted in (g) of Fig. 5, the session ID and the token are deleted.

As described, according embodiments of the present invention, input operations can be performed from an input terminal that is different from the display terminal and the input terminal directly communicates with the server without using the display terminal to manipulate the control of the content delivery. Thus, without being subject to constraints of content operations at the display terminal, the input terminals can independently expand and replace input functions for content delivery. Further, the display terminal can be specialized for functions of content display and since the display terminal is not involved with input operations, the display terminal is not affected by an expansion of input functions on the input terminal side. Since the input terminal can communicate directly with the server without using the display terminal, content delivery control becomes quicker and without delays.

Input functions can be upgraded by merely replacing the input terminal. Further, a general-purpose input terminal can be used, enabling the input terminal to perform content delivery through an existing communications network (mobile network, etc.) that enables communication. Since content delivery applications execute software on the input terminal, by updating the application without replacing the input terminal, input functions can be easily expanded.

Since the server can receive content delivery control from multiple input terminals by using session IDs and tokens, delivery of a single content can be controlled by concurrently using multiple input terminals. For example, individual family members each use an input terminal to enable one game to be played concurrently by multiple persons. Further, if the display terminal is a screen for a movie cinema or public viewing, by respectively distributing input terminals to viewers, for example, the contents (scenario) shown can be changed by numerous selections made for each scene, based on input operations from the viewers when the content is shown.

Further, within a residence, as a group, the display terminal and multiple input terminals can control delivery and even with input terminal outside the residence, viewing/listening to the same content (participation in the same game) from an outside location becomes possible.

### INDUSTRIAL APPLICABILITY

As described, the content delivery system, the content delivery apparatus, and the content delivery method according to the present invention are useful in systems that control the delivery of video and audio content.

### EXPLANATIONS OF LETTERS OR NUMERALS

- 100: content delivery system
- 101: server
- 102: display terminal
- 103: input terminal
- 103a: input terminal
- 104: network
- 105: mobile network
- 110: content
- 111: receiving/processing unit
- 121: display processing unit
- 122: display unit
- 131: input processing unit
- 201: content storage unit
- 202: session storage unit
- 203: delivering unit
- 204: content information transmitting unit
- 205: content metadata

## Claims

1. A content delivery system that delivers content from a server to a client, wherein
the client comprises:
a display terminal configured to display the content delivered from the server, and
an input terminal configured to output to the server, input information for controlling delivery of the content; and
the input terminal is connected directly through a communications network and not through the display terminal.

2. The content delivery system according to claim 1, wherein
the server delivers the content to the display terminal through a first network, and
the input terminal is connected to the server through a second network that is different from the first network.

3. The content delivery system according to claim 2, wherein
the first network is a broadband network,
the input terminal is a mobile terminal configured to have a general purpose communication function, an input function, and a display function, and
the second network is a communications network by which the mobile terminal can communicate.

4. The content delivery system according to any one of claims 1 to 3, wherein
the server, with respect to a single unit of the content delivered to the display terminal, permits concurrent connection of a plurality of the input terminals, and based on the input information of the plurality of the input terminals, controls the delivery of the content.

5. The content delivery system according to any one of claims 1 to 4, wherein
the content is interactive content, and
the server changes delivery details, based on the input information of the input terminal.

6. The content delivery system according to claim 5, wherein
the input terminal acquires/transmits consecutive values as the input information.

7. The content delivery system according to claim 5 or 6, wherein
the input terminal acquires/transmits binary data as the input information.

8. A content delivery apparatus configured to deliver content to a client including a display terminal that displays the delivered content and an input terminal that outputs input information for controlling delivery of the content, wherein
the content delivery apparatus directly receives through a communications network between the content delivery apparatus and the input terminal and not through the display terminal, the input information output from the input terminal.

9. A content delivery method of a content delivery system having a server that delivers content to a client including a display terminal that displays the delivered content and an input terminal that outputs input information for controlling delivery of the content, the content delivery method comprising:
directly receiving by the server, the input information from the input terminal connected to the server through a communications network between the server and the input terminal and not through the display terminal; and
controlling by the server and based on the input information, the delivery of the content to the display terminal.
